(19)

**Europäisches Patentamt**

**European Patent Office**

**Office européen des brevets**

(11) **EP 4 727 047 A1**

(12) **EUROPEAN PATENT APPLICATION**

(43) Date of publication:
**15.04.2026 Bulletin 2026/16**

(21) Application number: **24216149.5**

(22) Date of filing: **01.10.2024**

(51) International Patent Classification (IPC):
***H04L 1/1867*** (2023.01)

(52) Cooperative Patent Classification (CPC):
**H04L 1/1819; H04L 1/08; H04L 1/1864;
H04L 1/1867; H04L 1/1887; H04L 1/1896;**
H04L 2001/0097

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(62) Document number(s) of the earlier application(s) in
accordance with Art. 76 EPC:
**24203928.7 / 4 723 526**

(71) Applicant: **Vestel Elektronik Sanayi ve Ticaret
A.S.
45030 Manisa (TR)**

(72) Inventors:
• **ABIDRABBU, Shaima
45030 Manisa (TR)**
• **ARSLAN, Hüseyin
45030 Manisa (TR)**

(74) Representative: **Grünecker Patent- und
Rechtsanwälte
PartG mbB
Leopoldstraße 4
80802 München (DE)**

<u>Remarks:</u>
This application was filed on 28-11-2024 as a
divisional application to the application mentioned
under INID code 62.

(54) **COOPERATIVE RSMA COMMUNICATION**

(57) Some embodiments in the present disclosure relate to cooperative communication in wireless communication networks. In particular, a base station and communication entities are provided. The base station, comprises a transceiver configured to transmit, to a first communication entity, a first rate-splitting multiple access, RSMA, message, wherein a private stream of the first RSMA message includes first private data; and receive an acknowledgement message from the first communication entity, indicating whether or not the first RSMA message could be successfully decoded. The base station further comprises circuitry configured to, if the acknowledgement message indicates that the first RSMA message could not be successfully decoded, determine a second RSMA message, wherein a common stream of the second RSMA message includes a first common part associated with the first communication entity and a second common part associated with a second communication entity, each of the first common part and the second common part includes a redundancy version of the first private data, wherein the transceiver is configured to transmit the second RSMA message to the first communication entity.

Fig. 6

**Description**

The present disclosure relates to cooperative Rate-Splitting Multiple Access (RSMA) communication. In particular, the present disclosure provides methods and apparatuses for such wireless applications.

BACKGROUND

In modern wireless communication systems, multiple access (MA) techniques play a crucial role in ensuring efficient utilization of available spectrum resources. Conventional methods such as Time Division Multiple Access (TDMA), Frequency Division Multiple Access (FDMA), Orthogonal Frequency Division Multiple Access (OFDMA), and Space-Division Multiple Access (SDMA) have been adopted in various standards including 4G LTE and 5G. These techniques rely on orthogonal resource allocation through distinct time, frequency, or spatial resource allocation to manage interference among users.

However, as the demand for high data rates and reliable communication grows, these traditional schemes face limitations in terms of spectrum efficiency and interference management, particularly in dense user environments. In view thereof, non-orthogonal multiple access (NOMA) was introduced to enhance spectral efficiency by allowing multiple users to share the same time-frequency resources, though its reliance on rigid interference management techniques like Successive Interference Cancellation (SIC) poses challenges.

Rate-Splitting Multiple Access (RSMA) has emerged as a promising aimed at addressing these challenges. RSMA introduces the concept of splitting users' data into multiple streams and transmitting a portion of the data to each user. RSMA offers a significant advancement, particularly for 6G networks, by providing a more flexible and efficient approach to interference management. RSMA operates by splitting user messages into common and private parts, enabling a dynamic strategy, where interference can be partially decoded and partially treated as noise, effectively bridging the gap between SDMA and NOMA.

Its adaptability allows RSMA to optimize performance across varying interference conditions, functioning like SDMA when interference is weak and like NOMA when it is strong. This versatility makes RSMA a crucial technology for 6G, as it seamlessly integrates with existing MA techniques and addresses the diverse requirements of future wireless networks. Ultimately, RSMA's flexible interference management and adaptability make it a foundational technology for next-generation wireless communication, driving higher spectral efficiency, improved user experience, and better utilization of scarce spectrum resources.

Regarding RSMA for new core services in and beyond 5G and 6G, Internet-of-Thing (IoT) users in 6G are expected to have hybrid requirements, such as the simultaneous need for enhanced throughput and reduced transmission delay. This type of service, known as enhanced eMBB-URLLC-mMTC, has been identified as one of the core services in 6G. However, it remains uncertain whether RSMA is a promising MA technique capable of accommodating the hybrid requirements of massive IoT users in 6G.

At the same time, ensuring reliable communication remains a critical issue in wireless systems, particularly in challenging channel conditions. Hybrid Automatic Repeat Request (HARQ) has become a widely adopted error control technique that combines forward error correction with automatic retransmission of erroneous data packets. HARQ mechanisms improve the reliability of data transmission by allowing the receiver to request retransmission of corrupted packets, thus reducing the overall packet error rate.

HARQ has been integrated into standards like High-Speed Packet Access (HSPA) and Long-Term Evolution (LTE), where it operates with parallel stop-and-wait processes, using a Boolean feedback mechanism to improve robustness against link adaptation imperfections and enhance spectral efficiency.

As mobile communications evolve toward 6G, the complexity of use cases, such as enhanced mobile broadband (eMBB) and massive machine-type communication (mMTC), has increased. Ultra-Reliable Low-Latency Communication (uRLLC) in 5G and 6G demands near 100% reliability and sub-millisecond latency, presenting challenges due to the latency-reliability trade-off inherent in HARQ.

Despite its effectiveness in improving reliability, the HARQ retransmission process can increase latency, conflicting with the low latency needs of uRLLC. Additionally, achieving high throughput remains a priority, driving ongoing research into more agile HARQ designs capable of meeting the diverse requirements of 5G and 6G networks.

Research on HARQ in the context of uRLLC networks highlights several key areas, aimed at balancing latency, reliability, and throughput. While HARQ is inherently beneficial for enhancing reliability through retransmissions, it introduces challenges related to increased latency. To address this, various studies have explored techniques to optimize retransmission strategies, such as early or partial retransmissions and NOMA-based approaches, which aim to reduce the delay while maximizing throughput. Additionally, research has focused on optimizing throughput under strict uRLLC constraints and improving energy efficiency. Efficient resource allocation and scheduling have also been identified as factors for minimizing delay, with techniques like synchronous HARQ and advanced optimization algorithms being proposed to enhance resource efficiency and meet stringent latency requirements. Theoretical models, including Markov models, have been developed to analyze HARQ performance, considering factors like block size, modulation schemes, and transmission rounds, thereby providing valuable insights into throughput and Quality of Service (QoS) optimization. Moreover, the traditional HARQ feedback mechanisms, which rely on ACK/NACK signals, have been questioned in certain uRLLC scenarios due to latency constraints, prompting the exploration of alternative approaches such as resource allocation to replicas and repeated packet transmissions to enhance reliability without solely depending on retransmissions.

However, the integration of RSMA with existing HARQ schemes presents several technical challenges. The interaction between data rate-splitting and HARQ retransmissions must be carefully managed to optimize system performance.

Research on the HARQ protocol in RSMA networks has received relatively limited attention in the literature. For example, a HARQ-based design for RSMA networks may incorporate three retransmission techniques: RSMA, NOMA, and SDMA. More specifically, RSMA, NOMA, or SDMA may be selected for retransmission during a HARQ round.

Since traditional HARQ protocols inherently rely on time diversity and introduce network delay, there is a need for a novel HARQ protocol suitable for future wireless networks. The trade-off between reliability and latency has long been a limiting factor, particularly in uRLLC networks, where traditional HARQ protocols struggle to meet stringent requirements.

Therefore, there is a need for novel methods and systems that can harmonize RSMA with HARQ protocols to improve both spectrum efficiency and transmission reliability. Such methods and systems should provide high reliability and low latency, meeting the diverse and demanding needs of next-generation wireless networks.

SUMMARY

Methods and techniques, as well as the corresponding devices are provided, facilitating cooperative communication in wireless communication systems.

The present disclosure may improve network efficiency and performance, which are key considerations in the development of wireless communication standards. By addressing these critical aspects, the disclosure contributes to the overall advancement and optimization of wireless networks.

The invention is defined by the independent claims. Some exemplary implementations are provided by the dependent claims.

In some embodiments, a base station is provided. The base station comprises a transceiver configured to transmit, to a first communication entity, a first rate-splitting multiple access, RSMA, message, wherein a private stream of the first RSMA message includes first private data; and receive an acknowledgement message from the first communication entity, indicating whether or not the first RSMA message could be successfully decoded. The base station further comprises circuitry configured to, if the acknowledgement message indicates that the first RSMA message could not be successfully decoded, determine a second RSMA message, wherein a common stream of the second RSMA message includes a first common part associated with the first communication entity and a second common part associated with a second communication entity, each of the first common part and the second common part includes a redundancy version of the first private data. The transceiver is configured to transmit the second RSMA message to the first communication entity.

These and other features and characteristics of the presently disclosed subject matter, as well as the methods of operation and functions of the related elements of structures and the combination of parts and economies of manufacture, will become more apparent upon consideration of the following description and the appended claims with reference to the accompanying drawings, all of which form a part of this specification. It is to be expressly understood, however, that the drawings are for the purpose of illustration and description only and are not intended as a definition of the limits of the disclosed subject matter.

Further, although the described methods are primarily centered around certain radio access technologies and network structures like cellular networks, the proposed ideas and their variations can also be extended to other technologies and networks, including Bluetooth, ZigBee, 6G networks, 5G/New Radio (NR), Long-Term Evolution (LTE), LTE-Advanced, LTE-Advanced Pro, Internet of Things (IoT), Industrial IoT (IIoT), and narrowband IoT (NB-IoT). Therefore, the scope of this disclosure is not confined to the given examples.

BRIEF DESCRIPTION OF DRAWINGS

An understanding of the nature and advantages of various embodiments may be realized by reference to the following figures.

Fig. 1      is a block diagram illustrating a basic communication system;

Fig. 2      illustrates a system model of a wireless communication system, to which embodiments of the present disclosure may be applied;

Fig. 3a      illustrates the structure of a rate-splitting multiple access, RSMA, message for transmission to a first communication entity;

Fig. 3b      illustrates the structure of a rate-splitting multiple access, RSMA, message for transmission to a second communication entity;

Fig. 4      shows an overview of a basic RSMA system and the generation of RSMA messages;

Fig. 5a    illustrates the transmission of a first rate-splitting multiple access, RSMA, message to a first communication entity and a corresponding acknowledgment message in a case where the first RSMA message could not be decoded successfully according to an embodiment;

Fig. 5b    illustrates the transmission of a second rate-splitting multiple access, RSMA, message to the first communication entity, including redundancy versions of private data according to the embodiment;

Fig. 6    illustrates the transmission of a third and a fourth rate-splitting multiple access, RSMA, message to a second communication entity and a acknowledgment message in a case where the third RSMA message could be decoded successfully according to the embodiment;

Fig. 7a    is a block diagram of a base station according to an embodiment;

Fig. 7b    is a block diagram of a communication entity according to an embodiment;

Fig. 8a    illustrates the steps of a method for a base station according to an embodiment, and its interplay with the steps of a method for a communication entity as illustrated in Fig. 7b;

Fig. 8b    illustrates the steps of a method for a communication entity according to an embodiment, and its interplay with the steps of a method for a base station as illustrated in Fig. 7a;

Fig. 9a    illustrates cooperative communication in case of unsuccessful decoding of a first rate-splitting multiple access, RSMA, message, for a first communication entity having a low latency requirement and a second communication entity having a high capacity requirement;

Fig. 9b    illustrates cooperative communication in case of unsuccessful decoding of a first rate-splitting multiple access, RSMA, message, for a first communication entity having a low latency requirement and a second communication entity having a high capacity requirement;

Fig. 10a    illustrates cooperative communication, for a first communication entity having a high data rate requirement and a second communication entity having a high capacity requirement; and

Fig. 10b    illustrates cooperative communication, for a first communication entity having a low latency requirement, a second communication entity having a high data rate requirement and a third communication entity having a high capacity requirement.

DETAILED DESCRIPTION

For purposes of the description hereinafter, the terms "end," "upper," "lower," "right," "left," "vertical," "horizontal," "top," "bottom," "lateral," "longitudinal," and derivatives thereof shall relate to the disclosed subject matter as it is oriented in the drawing figures. However, it is to be understood that the disclosed subject matter may assume various alternative variations and step sequences, except where expressly specified to the contrary. It is also to be understood that the specific devices and processes illustrated in the attached drawings, and described in the following specification, are simply exemplary embodiments or aspects of the disclosed subject matter. Hence, specific dimensions and other physical characteristics related to the embodiments or aspects disclosed herein are not to be considered as limiting unless otherwise indicated.

No aspect, component, element, structure, act, step, function, instruction, and/or the like used herein should be construed as critical or essential unless explicitly described as such. Also, as used herein, the articles "a" and "an" are intended to include one or more items and may be used interchangeably with "one or more" and "at least one." Furthermore, as used herein, the term "set" is intended to include one or more items (e.g., related items, unrelated items, a combination of related and unrelated items, and/or the like) and may be used interchangeably with "one or more" or "at least one." Where only one item is intended, the term "one" or similar language is used. Also, as used herein, the terms "has," "have," "having," or the like are intended to be open-ended terms. Further, the phrase "based on" is intended to mean "based at least partially on" unless explicitly stated otherwise.

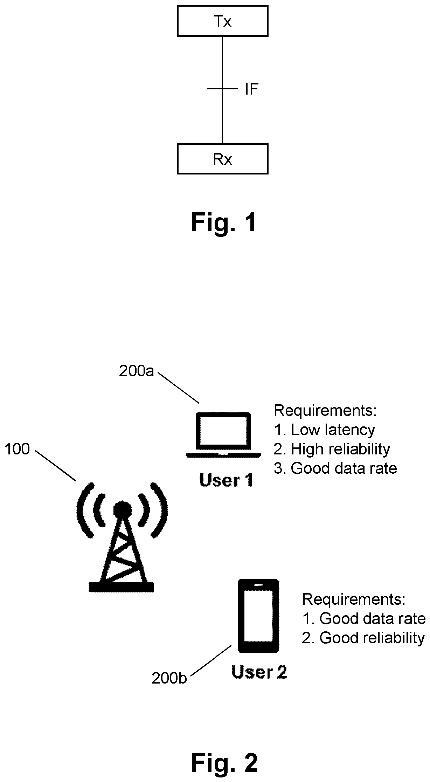

Fig. 1 illustrates an exemplary wireless system in which Tx represents a transmitter and Rx represents a receiver of a wireless signal. The transmitter Tx is capable of transmitting a signal to the receiver Rx or to a group of receivers or to broadcast a signal over an interface IF. The interface may be any wireless interface. The interface may be specified by means of resources, which can be used for the transmission and the reception by the transmitter Tx and the receiver Rx. Such resources may be defined in one or more (or all) of the time domain, frequency domain, code domain, and space domain. It is noted that in general, a "transmitter" and a "receiver" may be also both integrated in the same device. In other words, the devices Tx and Rx in Fig. 1 may respectively also include the functionality of the Rx and Tx.

The present disclosure is not limited to any particular transmitter Tx, receiver Rx and/or interface IF implementation. However, it may be applied readily to some existing communication systems as well as to the extensions of such systems, or to new communication systems. Exemplary existing communication systems may be, for instance, the 5G New Radio (NR) in its current or future releases, and/or the IEEE 802.11 based systems such as the recently studied IEEE 802.11 be or the like. The wireless signal is not necessarily a communication signal in the sense that it does not necessarily carry out human or machine communication. It may be a sensing signal such as radar signal or sounding signal or any other kind of wireless signal. The communication signal may be a signal for communication and sensing (Joint Communication & Sensing).

Fig. 2 illustrates a system model of a wireless communication system, to which embodiments of the present disclosure may be applied. In Fig. 1 a base station 100 is using RSMA as a multi-access approach to serve two communication entities 200a, 200b, indicated as user 1 and user 2, respectively. However, the present disclosure is not limited thereto, and the base station 200 may serve more than two or less than two communication entities.

According to this disclosure, the communication entities may be any communication entity communicating with the base station 100, e.g. in a wireless manner. A communication entity may be a wireless communication entity, a wireless communication apparatus or device, a mobile communication device, a user equipment (UE), a smartphone, a wearable, an IoT device, or the like.

The 5G New Radio (NR) defines three core services (service categories): uRLLC (ultra-reliable low latency communication), mMTC (massive machine-type communication), and eMBB (enhanced mobile broadband). Each of these service categories has distinct key performance indicators (KPI): eMBB users require gigabit-per-second (Gbps) data rates, uRLLC users demand reliable transmissions with a $10^{-5}$ block error rate (BLER) and latency within 1 ms, and mMTC users require high connection density and energy efficiency. In 6G, these KPIs are expected to be further tightened and improved. However, interference has already been identified as a significant barrier to meeting these KPIs in 5G, and this challenge is anticipated to become even more severe and unpredictable in 6G. If not properly managed, multi-user interference can dominate and severely degrade system performance. The limitations of existing multiple access (MA) methods in handling this interference underscore the need for improvement.

In the exemplary system illustrated in Fig. 2, user 1 (communication entity 200a) is an uRLLC user with requirements of low latency, high reliability, and a good data rate. User 2 (communication entity 200b), on the other hand, is a normal user with the requirements of a good data rate and good reliability.

The base station 200 is using RSMA to formulate signals to be transmitted to both communication entities 200a, 200b. RSMA is built on the concept of rate-splitting, which partitions messages into common and private components, allowing for partial decoding and the treatment of residual interference as noise. Unlike the rigid interference management strategies employed in SDMA and NOMA, RSMA's flexibility allows it to adapt to various interference scenarios by dynamically adjusting the power and content of common and private streams.

That is, in the example illustrated in Fig. 2, two streams are determined for each user in the network. The first stream is called the common stream and contains a portion associated with each user in the network. The common stream may be transmitted with a higher transmit power than the private stream. The private stream contains specific data of each user, and may be AP precoded and transmitted toward respective user using a MISO approach.

AP precoding (Access Point precoding) is a technique used in multi-antenna wireless communication systems, where the access point (AP) pre-processes the transmitted signals by adjusting their amplitude and phase. This process optimizes how the signals combine at the receiving devices (users), enabling the access point to direct signals to specific users while minimizing interference to others.

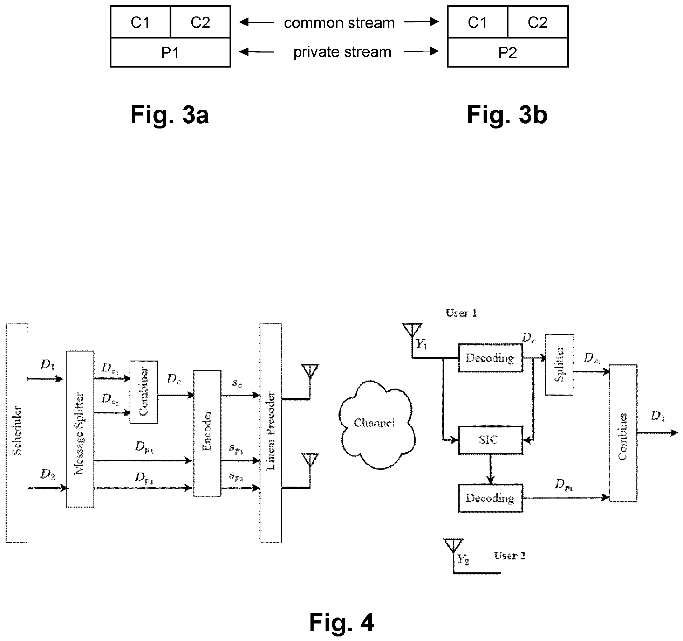

Based on that, the base station 100 is forming the transmitted signal for user 1 and user 2 as shown in Figs. 3a and 3b. Fig. 3a illustrates the structure of a rate-splitting multiple access, RSMA, message for transmission to a first communication entity 200a. Fig. 3b illustrates the structure of a rate-splitting multiple access, RSMA, message for transmission to a second communication entity 200b.

As can be seen from Figs. 3a and 3b, each of the RSMA messages includes a common stream (which is identical for the two RSMA messages) and a private stream. The common stream includes two parts, each being associated with a respective communication entity 200a, 200b. Further, each RSMA message includes a private stream, which differs between the RSMA message to be transmitted to the first communication entity 200a and the RSMA message to be transmitted to the second communication entity 200b. The private stream to be transmitted to the first communication entity 200a may include first private data P1 and the private stream to be transmitted to the second communication entity 200b may include second private data.

Fig. 4 shows an overview of a basic RSMA system and the generation of RSMA messages. In general, a base station may be serving a plurality of communication entity, wherein each communication entity is indexed with *k*. The total number of communication entities served by the base station may be given by *K*. the base station may be equipped with an antenna array of size $M_k$, whereas every communication entity may be equipped with an array of *N* antennas. If data $D_k$ is to be transmitted to user *k* over the network, the message $D_k$ is split into a common part $D_{c,k}$ and a private part $D_{p,k}$ (operation of the message splitter). Subsequently, the common parts of all users are combined as $\{D_{c,1}, D_{c,1},... D_{c,k}\}$ by the combiner and jointly encoded into the common stream $s_c$ by the encoder, while the private parts $\{D_{p,1}, D_{p,1},... D_{p,k}\}$ are respectively encoded into private streams $\{s_{p,1}, s_{p,1},... s_{p,k}\}$. Then, both data streams (denoted as $s = [s_c, s_1, ..., s_k]^T \in C^{K+1}$) are linearly pre-coded before transmission using the precoder as $P = [p_c, p_1, ..., p_K]$, where $pc, pk \in C^{Nt}$ reflects the pre-coder of the common and private streams, respectively. The power of the common stream may be denoted as $P_c = \|p_c\|^2$. Therefore, the transmitted signal of the kth communication entity can be given as

$$s_k = \sqrt{p_c}s_c + \sum_{k=1}^{K} \sqrt{p_k}s_{p_k}, \; \forall k \in K,$$

where $p_k$ denotes the transmit power of sub-message $s_{pk}$ for communication entity k. The signal received by the *k*th communication entity consists of four parts:

$$y_k = h_k^H s_c + h_k^H s_k + \sum_{j=1, j\neq k}^{K} h_k^H s_j + n_k,$$

where $h_k \in C^{Nt \times 1}$ denoted the channel gain from the base station to the kth communication entity and it is known by the base station. $n_k$ is the additive white Gaussian noise (AWGN) at communication entity *k* with a mean of zero and a variance of $\sigma_k^2$ and may be represented as $n_k \sim \mathcal{N}(0,\sigma^2)$.

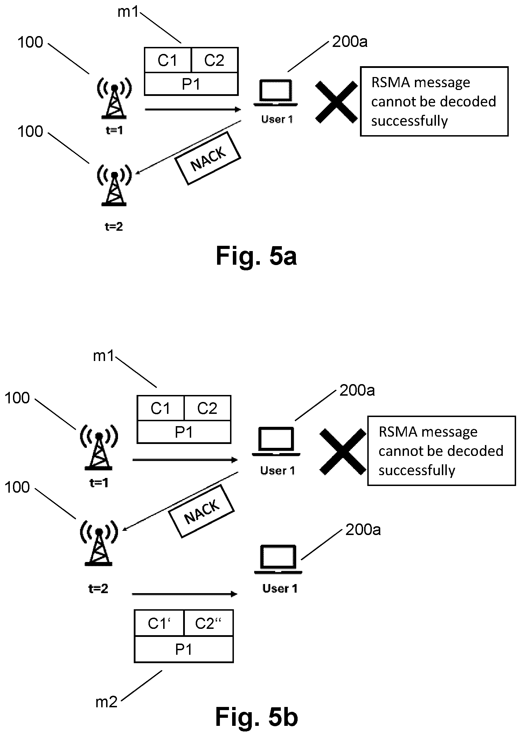

If a communication entity is not able to decode respective RSMA message successfully, it may transmit an acknowledgement message to the base station, indicating that the RSMA message could not be successfully decoded, e.g. in the framework of a HARQ ACK/-NACK message. This situation is illustrated if Fig. 5a.

Fig. 5a illustrates the transmission of a first rate-splitting multiple access, RSMA, message m1 to a first communication entity 200a (at time t=1) and a corresponding acknowledgment message in a case where the first RSMA message m1 could not be decoded successfully. The first RSMA message m1 includes a common stream with common parts carrying common data C1 and C2 and a private part carrying first private data P1. Upon a determination that the first RSMA message m1 could not be decoded successfully by the first communication entity 200a, the first communication entity 200a transmits an acknowledgment message to the base station 100, indicating that the first RSMA message could not be successfully decoded by the first communication entity 200a.

In response thereto, the base station 100 could simply retransmit the data intended to be received by the first communication entity 200a. I.e. the base station 100 could, in response to receiving the acknowledgement message (NACK) from the first communication entity, an RSMA message including a common stream with common part C1 (associated with the first communication entity 200a) and a private stream including the first private data P1.

However, due to the reliance on time diversity inherently to conventional HARQ approaches, this behavior of the base station 100 may result in an increased latency, therefore potentially not meeting the requirements of the first communication entity 200a.

*First embodiment*

In view thereof, according to the present disclosure, cooperative communication is performed, in particular in the framework of a HARQ process. Said cooperating communication utilizes the common streams of RSMA messages to support communication entities experiencing an error in decoding of an RSMA message by utilizing user diversity. User diversity relates to the transmission of redundancy versions of private data using common parts associated with other communication entities in a common stream. In other words, the RSMA message transmitted by the base station 100 in response to reception of a NACK message includes one or more redundancy versions of the first private data in common parts of the common stream, that are associated with other, cooperative, communication entities.

Fig. 5b illustrates the transmission of a second rate-splitting multiple access, RSMA, message m2 to the first communication entity 200a, including redundancy versions of private data. As can be seen from the figure, the second RSMA message m2, which is transmitted at t =2, includes the first private data in a private stream P1 (as in the first RSMA message m1) and, further, includes redundancy versions of the first private data in common parts C1' and C2' of the common stream. With this, the first communication entity 200a receives its private data multiple times and, in particular, in a common stream, which may be transmitted with a higher transmit power than the private stream. Thereby, the probability that the first communication entity 200a may not be able to successfully obtain the first private data is reduced.

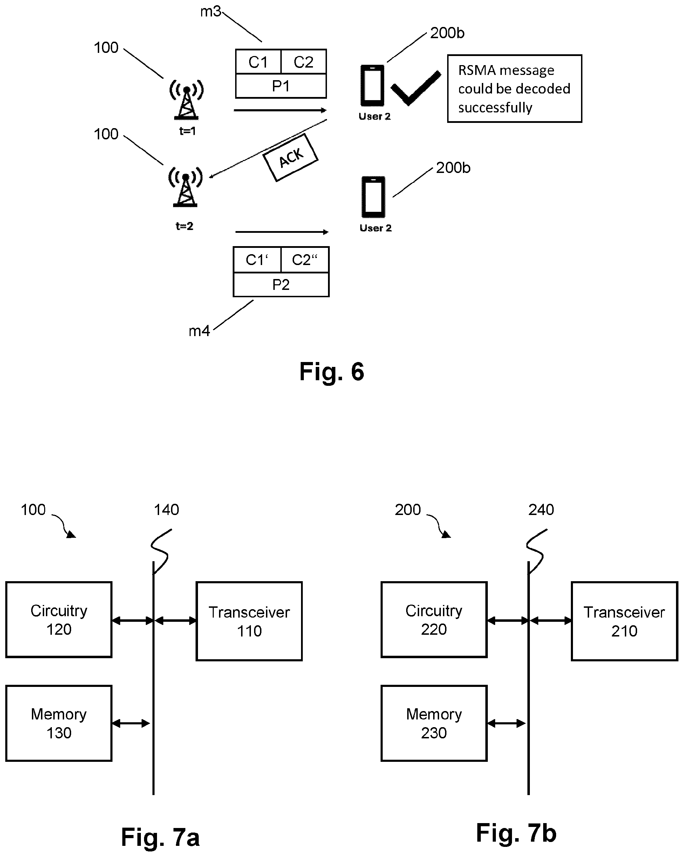

On the other hand, the second communication entity 200b may successfully receive respective private data in a third RSMA message transmitted at t=2, as illustrated in Fig. 6. Fig. 6 illustrates the transmission of a third RSMA message m3 to a second communication entity 200b (at time t=1), of an acknowledgment message (ACK) in a case where the third RSMA message m3 could be decoded successfully by the second communication entity 200b, and of a fourth RSMA m4 message to the second communication entity 200b (at time t=2).

The common stream of the third RSMA message m3 is identical to the common stream as included in the first RSMA message m1 transmitted to the first communication entity 200a, as illustrated in Figs. 5a and 5b. The private stream of the third RSMA message m3 includes private data P2 to be transmitted to the second communication entity 200b. After having determined that the third RSMA message m3 could be successfully decoded, the second communication entity 200b transmits an acknowledgment message to the base station 100, indicating that the third RSMA message m3 could be successfully decoded. Subsequently, the base station 100 transmits a fourth RSMA m4 message to the second communication entity 200b. The fourth RSMA message m4 includes a common stream identical to the common stream of the second RSMA message m2 transmitted to the first communication entity 200a by the base station in response to the NACK message received (cf. Figs. 5a, 5b). However, the private stream of the fourth RSMA message m4 includes private data intended for the second communication entity 200b. Therefore, the second communication entity 200a does not experience a disadvantage by the redundancy versions of the first private data being included in a common part of the second/fourth RSMA m2/m4 message associated with the second communication entity 200b.

As illustrated by the example of Figs. 5a, 5b and 6, the principle of this disclosure may address the challenges of HARQ in RSMA networks by leveraging the inherent features of RSMA to enhance reliability and reduce latency without altering its conventional structure. For this purpose a parallel HARQ protocol is used instead of a serial one, capitalizing on the common stream features, and enabling collaboration among multiple users.

Traditional HARQ approaches rely solely on time diversity, which can be limiting, especially for uRLLC that struggle to meet their KPIs. Cooperative HARQ typically draws from relay networks, but this disclosure proposes a solution by utilizing the common streams of RSMA to support users in error where another type of diversity is added to the network, which is user diversity.

That is, instead of retransmitting a single redundancy version (RV) for an erroneous user, this approach allows multiple RVs to be sent with the support of other users' common streams. This method may increase the diversity at the receiver side, enhancing performance by combining both round diversity and support from multiple users. At the same time, the communication of the users who are supporting is not affected as compared with the relay networks.

This new parallel HARQ protocol offers improved performance and reliability, making it a cost-effective solution for addressing the limitations of conventional HARQ in RSMA networks. Furthermore, it identifies RSMA as a feasible MA strategy for meeting the hybrid needs of enormously IoT users in 6G.

It is understood that, although the present disclosure is described in connection with the HARQ approach, the disclosure is not limited thereto, and may be applied to any other feedback approach, wherein it is indicated to a base station whether or not an RSMA message could not be decoded successfully.

Fig. 7a is a block diagram of a base station 100 according to an embodiment. The base station comprises a transceiver 110 configured to transmit, to a first communication entity 200a, a first rate-splitting multiple access, RSMA, message m1, wherein a private stream of the first RSMA message m1 includes first private data. The transceiver 110 is further configured to receive an acknowledgement message from the first communication entity 200a, indicating whether or not the first RSMA message m1 could be successfully decoded. The base station 100 further comprises circuitry 120 configured to, if the acknowledgement message indicates that the first RSMA message m1 could not be successfully decoded, determine a second RSMA message m2, wherein a common stream of the second RSMA message m2 includes a first common part associated with the first communication entity 200a and a second common part 200b associated with a second communication entity 200a. Each of the first common part and the second common part includes a redundancy version of the first private data. The transceiver 110 is further configured to transmit the second RSMA message m2 to the first communication entity 200a.

The base station 100 may further include memory 130 storing, for example, a program read by the circuitry 120 and causing the circuitry to perform respective operations. The circuitry 120 may be configured to control the transceiver 110 to perform respective operations. The transceiver 110, the circuitry 120, and the memory 130 may communicate with each other using communication bus 140.

Fig. 7b is a block diagram of a communication entity 200a (fist communication entity) according to an embodiment. The communication entity 200a includes a transceiver 210 configured to receive a first rate-splitting multiple access, RSMA, message m1, wherein a private stream of the first RSMA message m1 includes first private data. The communication entity 200a further comprises circuitry 220 configured to decode the first RSMA message m1. The transceiver 210 is further configured to transmit an acknowledgement message, indicating whether or not the first RSMA message m1 could be successfully decoded, and to receive, if the first RSMA message m1 could not be successfully decoded, a second RSMA message m2, wherein a common stream of the second RSMA message m2 includes a first common part associated with the communication entity 200a and a second common part associated with a second communication entity 200b. Each of the first common part and the second common part includes a redundancy version of the first private data.

The communication entity 200a may further include memory 230 storing, for example, a program read by the circuitry 220 and causing the circuitry 220 to perform respective operations. The circuitry 220 may be configured to control the transceiver 210 to perform respective operations. The transceiver 210, the circuitry 220, and the memory 230 may communicate with each other using communication bus 240.

As illustrated in Fig. 5a to 6, a common stream of the first RSMA message m1 may include a first common part associated with the first communication entity 200a and a second common part associated with the second communication entity 2000b.

Further, a private stream of the second RSMA message m2 may include the first private data.

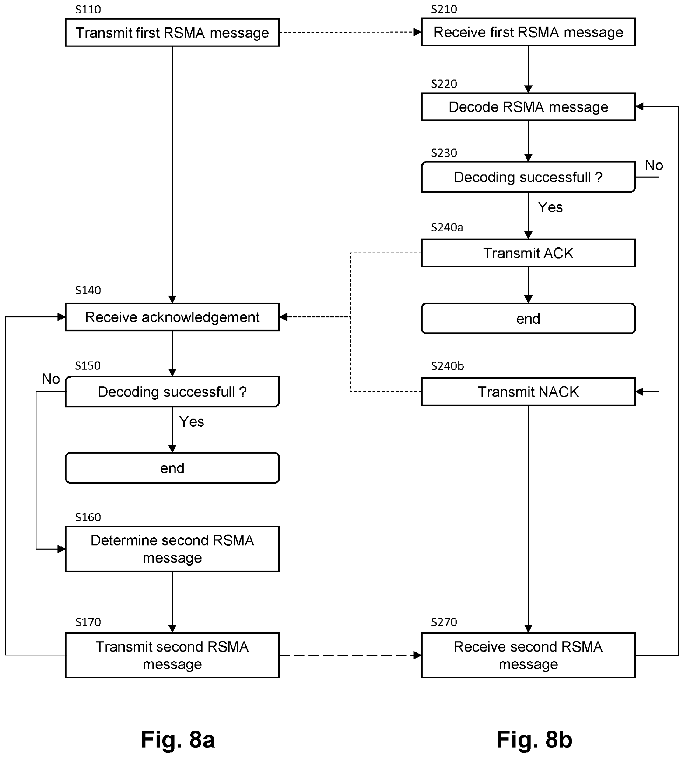

Figs. 8a and 8b illustrate the steps of methods for a base station 100 and for a first communication entity 200a, respectively, and their interplay. In step S110, the base station 100 transmits, to the first communication entity 200a, a first rate-splitting multiple access, RSMA message m1, wherein a private stream of the first RSMA message m1 includes first private data. In step S210, the first communication entity 200a receives the first RSMA message m1, which is decoded in step S220. In step S230, it is determined whether decoding of the first RSMA message m1 was successful. If so (yes in S230), an acknowledgement message indicating that the first RSMA message m1 could be decoded successfully is transmitted to the base station 100 in step S240a. Then, the method ends. On the other hand, if the first RSMA message m1 could not be successfully decoded (no in step S230), the first communication entity 200a transmits an acknowledgement message, indicating that the first RSMA message m1 could not be successfully decoded, in step S240b. In step S140, the base station 100 receives the acknowledgement message from the first communication entity 200a, indicating whether or not the first RSMA message m1 could be successfully decoded. If decoding was successful (yes in step S150), the method ends. On the other hand, if the acknowledgement message indicates that the first RSMA message m1 could not be successfully decoded, a second RSMA message m2 is determined in step S160. Specifically, a common stream of the second RSMA message m2 includes a first common part associated with the first communication entity 200a and a second common part associated with a second communication entity, and each of the first common part and the second common part includes a redundancy version of the first private data. In step S170, the second RSMA message m2 is transmitted to the first communication entity 200a and is received by said communication entity 200a in step S270. After steps S170 and S270, the methods proceed to steps S140 and S220, respectively. That is, the first communication entity 200a decodes the second RSMA message m2 in step S220 and transmits, depending on whether decoding of the second RSMA message was successful, a corresponding acknowledgment message to the base station 100, which is received in step S140.

According to an embodiment, given that the base station 100 may have prior knowledge about the communication entities in the network and their specific requirements, it can make informed decisions regarding data transmission.

For example, the first communication entity 200a may be associated with a requirement on reliability and/or latency of communication. The second communication entity 200b may not associated with the requirement on reliability and/or latency of communication.

For example, the requirement on reliability and/or latency of communication is a requirement of Ulra-Reliable Low-Latency Communication, uRLLC.

That is, the communication entity 200 may have a high sensitivity to latency, requiring minimal delay in communication. In the event of a failed decoding of an RSMA message by the first communication entity 200a, the base station may retransmit the private stream for communication entity 1. Additionally, the common streams for other communication entities 20b in the network, i.e. communication entities not associated with the requirement on reliability and/or latency of communication, will include redundancy versions (RVs) of the first private data.

In other words, for retransmission of RVs of the first private data, the base station 100 may include said RVs into common parts of a common stream of the second RSMA message m2 that are associated with a second communication entity 200a, which is not associated with the requirement.

This redundancy may ensure that, even if the direct transmission fails, the data can still be recovered from the common streams of supporting second communication entities 200b. The number of communication entities participating in this support, i.e. the number of communication entities 200b whose common part may be used for retransmission of RVs of the first private data, may be determined based on the base station's knowledge of the network, ensuring that sufficient redundancy is available. Consequently, the first private stream is retransmitted, while the common streams for both the first communication entity 200a and the supporting communication entities incorporate the redundancy versions. This strategy may leverage both time diversity and user diversity, significantly reducing latency and enhancing the reliability of communication for the first communication entity 200a, while allowing other communication entities to continue their communications with minimal disruption.

For example, the second communication entity 200b may be associated with a requirement of enhanced mobile broadband, EMBB, and/or massive machine-type communication, mMTC.

As described above, the base station may transmit a third RSMA message m3 and a fourth RSMA message m4 to the second communication entity 200b. Specifically, the transceiver 110 may be configured to transmit, to the second communication entity 200b, a third RSMA message m3, wherein a common stream of the third RSMA message m3 corresponds to the common stream of the first RSMA message m1, and a private part of the third RSMA message m3 includes second private data. Further, the transceiver 110 may transmit, to the second communication entity 200a, a fourth RSMA message m4, wherein a common stream of the fourth RSMA message m4 corresponds to the common stream of the second RSMA message m2, and a private stream of the fourth RSMA message m4 includes fourth private data. The first RSMA message m1 and the third RSMA message m3 may be transmitted at a first timing instance (e.g. t=1 in Figs. 5a, 5b, and 6), and the second RSMA message m2 and the fourth RSMA message m4 may be transmitted at a second timing instance (e.g. t=2 in Figs. 5a, 5b, and 6( later than the first timing instance.

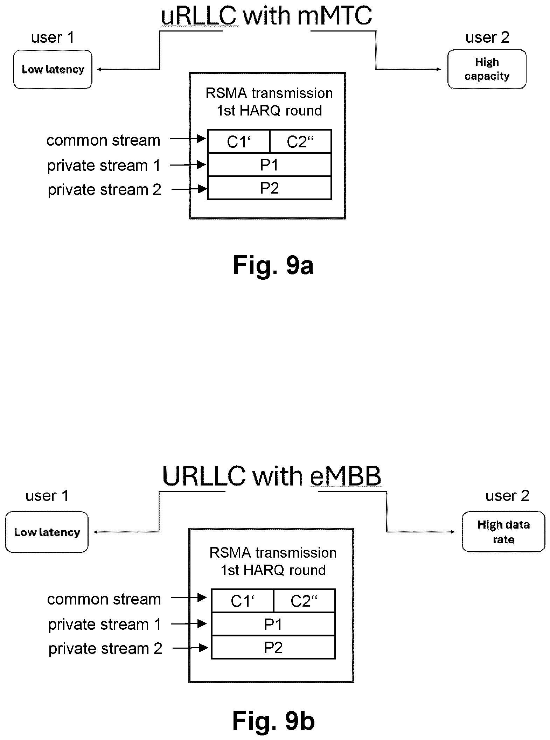

Fig. 9a illustrates an example of cooperative communication in case of unsuccessful decoding of a first rate-splitting multiple access, RSMA, message m1, for a first communication entity 200a having a low latency requirement and a second communication entity 200b having a high capacity requirement 200b.

The figure illustrates the requirements of a first user (first communication entity 200a) and a second user (second communication entity 200b). Specifically, the first communication entity 200a is associated with the service category uRLLC, whereas the second communication entity 200b is associated with the service category mMTC. The base station 100, upon determination that a first RSMA message m1 could not be decoded by the first communication entity 200a, transmits a second RSMA message to the first communication entity 200a and a fourth RSMA message m4 to the second communication entity 200b. The common stream included in said second and fourth RSMA messages m2, m4 is illustrated in the figure and includes, in a common part associated with the second communication entity 200b, a redundancy version of the first private data. On the other hand, the private stream for the second communication entity 200 (private stream 2) includes private data intended for the second communication entity 200b. The private stream for the first communication entity 200a (private stream 1) includes the first private data.

With this approach, i.e. by a communication entity associated with uRLLC may be served with minimal latency and high reliability, while at the same time, a communication entity associated with mMTC is served through its private streams. Thereby, the approach effectively balances both requirements.

Fig. 9b illustrates an example of cooperative communication in case of unsuccessful decoding of a first rate-splitting multiple access, RSMA, message m1, for a first communication entity 200a having a low latency requirement and a second communication entity having a high capacity requirement.

The figure illustrates the requirements of a first user (first communication entity 200a) and a second user (second communication entity 200b). Specifically, the first communication entity 200a is associated with the service category uRLLC, whereas the second communication entity 200b is associated with the service category eMBB. The base station 100, upon determination that a first RSMA message m1 could not be decoded by the first communication entity 200a, transmits a second RSMA message to the first communication entity 200a and a fourth RSMA message m4 to the second communication entity 200b. The common stream included in said second and fourth RSMA messages m2, m4 is illustrated in the figure and includes, in a common part associated with the second communication entity 200b, a redundancy version of the first private data. On the other hand, the private stream for the second communication entity 200 (private stream 2) includes private data intended for the second communication entity 200b. The private stream for the first communication entity 200a (private stream 1) includes the first private data.

In Fig. 9b, the primary concern for uRLLC services is minimizing latency, while for eMBB services, the focus is on achieving high data rates. Based on collaboration, coordination, and cooperation among communication entities 200a, 200b, e.g. by allowing uRLLC services to share the common part of eMBB services, the latency for uRLLC can be reduced. This reduction occurs because retransmissions are now reliant on both time diversity and the number of eMBB communication entities willing to support uRLLC users.

However, the approach ensures that supporting communication entities still maintain partial communication capabilities, meaning they experience only minimal disruption. This aligns with the collaborative and cooperative concept, where assistance is provided without significantly harming those offering support.

In a modification, the base station 100 may receive, from each of a plurality of communication entities 200 served, an indication indicating whether or not respective communication entity is available for cooperative communication. That is, the transceiver 110 is configured to receive, from each of a plurality of communication entities 200, a cooperation indicator indicating whether or not respective communication entity 200 is available for cooperative communication. Further, common parts included in the second RSMA message m2 and associated with communication entities 200 available for cooperative communication include the first private data.

In other words, the base station 100 may include redundancy versions of the first private data in common parts of the second RSMA message m2 that are associated with communication entities that indicated their availability for cooperative communication. For example, common parts of the common stream of the second RSMA message m2 that are associated with communication entities not available for cooperative communication do not include redundancy versions of the first private data. With this approach, each communication entity 200 may decide whether or not it participates in cooperative communication, for example based on respective communication requirements.

Accordingly, in addition or alternatively to the above, each communication entity 200 served by the base station 100 may transmit the cooperation indicator to the base station 100. Specifically, the circuitry 220 may be configured to determine whether or not the communication entity 200 is available for cooperative communication. The transceiver 210 may be configured to transmit a cooperation indicator indicating whether or not the communication entity 200 is available for cooperative communication, wherein the transceiver 210 is further configured to receive a rate-splitting multiple access, RSMA message, if the communication entity is available for cooperative communication, wherein a common stream of the RSMA message includes a first common part associated with the communication entity 200, and the first common part includes a redundancy version of private data associated with another communication entity (e.g. first communication entity 200a).

*Second embodiment*

In the above-described embodiment, the cooperative communication is performed in the framework of a HARQ process, wherein redundancy versions of first private data (which could not be successfully decoded from a first RSMA message m1 by a first communication entity 200a) are included in common parts of a second RSMA message m2 that are associated with another communication entity (e.g. the second communication entity 200b).

However, the present disclosure is not limited thereto. In another embodiment, a base station 100 may include data to be transmitted to a first communication entity in a common part of an RSMA message that is associated with a second communication entity different from the first communication entity. In this framework, the assignment of common parts may be based on service categories (e.g. uRLLC, eMBB, mMTC) of the communication entities.

In other word, provided is a base station 100 serving a plurality of communication entities, comprising a transceiver 110 and circuitry 120. The circuitry 120 is configured to determine a rate-splitting multiple access, RSMA, message for each of the plurality of communication entities, wherein a common stream of each RSMA message includes a plurality of common parts, each associated with one of the plurality of communication entities. The circuitry 120 is configured to assign each of the plurality of common parts to one communication entity from among the plurality of communication entities, according to service categories of the plurality of communication entities. The transceiver 110 is configured to transmit each RSMA message to the respective communication entity.

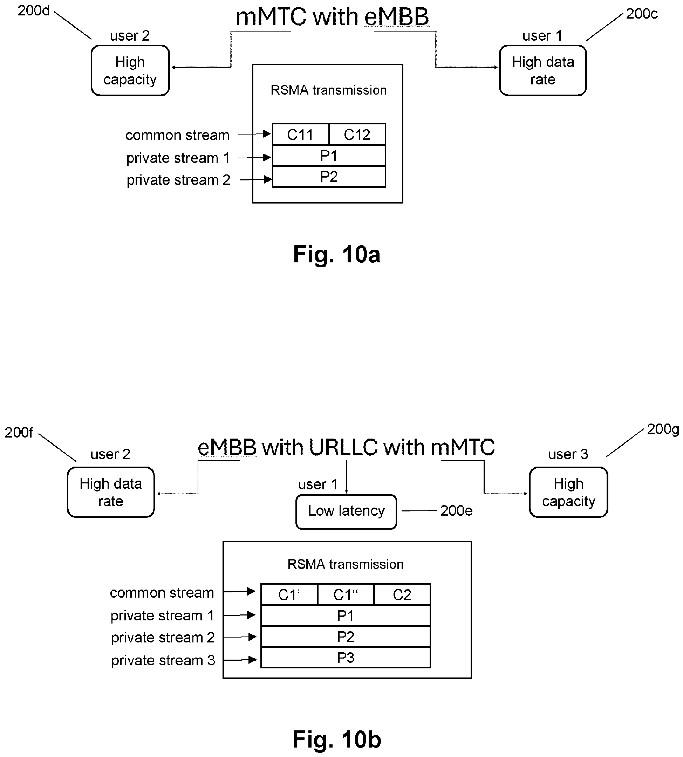

Fig. 10a illustrates cooperative communication, for a first communication entity 200c having a high data rate requirement and a second communication entity 200d having a high capacity requirement.

In the illustrated example, the first communication entity 200c is associated with service category eMBB, whereas the second communication entity 200d is associated with service category mMTC. The communication entities 200c, 200d are managed according to the KPIs of respective service categories. In this context, mMTC services prioritize higher capacity, while eMBB services focus on achieving high data rates. The example relies on collaboration, coordination, and cooperation among communication entities to optimize performance for both services. In this approach, eMBB services can leverage a portion of the resources typically allocated to mMTC services, thereby enhancing the data rate for eMBB communication entities. By accessing these additional resources, eMBB communication entities can transmit more data, ultimately resulting in an increased data rate. However, this resource reallocation may have an impact on mMTC communications, as the capacity for mMTC services is partially reduced. The success of this strategy depends on two key factors: the availability of eMBB's own resources and the number of mMTC communication entities willing to support eMBB communication entities in boosting their data rate. It is important to note that this approach is applicable regardless of whether the system is handling normal transmissions or retransmissions (as described in the first embodiment). Therefore, it offers a versatile solution that can adapt to various transmission conditions, including error-prone scenarios.

As can be seen from the figure, in RSMA messages to be transmitted to the communication entities 200c, 200d, a common stream includes two common parts, associated with the first and the second communication entity, respectively. However, due to the cooperative communication, both parts are assigned to the first communication entity 200c, and therefore carry data to be transmitted to the first communication entity. The private streams of the RSMA messages to be transmitted to the first communication entity 200c and the second communication entity 200d include, respectively, first private data and second private data.

Fig. 10b illustrates cooperative communication, for a first communication entity 200e having a low latency requirement, a second communication entity 200f having a high data rate requirement, and a third communication entity 200g having a high capacity requirement.

This example highlights the effectiveness of the present approach in a framework, where three services - eMBB, uRLLC, and mMTC - are integrated within a single network. Specifically, these services are all managed within an RSMA network. The present embodiment offers a method for the base station to leverage RSMA to efficiently schedule multiple services with varying requirements. In the figure, three types of communication entities are illustrated, each representing a different service type: the eMBB communication entity requires a high data rate, the uRLLC communication entity demands low latency, and the mMTC communication entity needs consistent connectivity. According to the embodiment, the mMTC communication entity is continuously served by transmitting a private stream labeled P3. For the eMBB communication entity, additional common portions are allocated alongside their dedicated resources, effectively boosting their data rate. In the case of the uRLLC communication entity, if an error occurs, extra common portions are allocated to enhance diversity, thereby minimizing latency.

As can be seen from the figure, in RSMA messages to be transmitted to the communication entities 200e, 200f, 200g, a common stream includes three common parts, associated with the first 200e the second 200f, and the third communication entity 200g, respectively. However, due to the cooperative communication, two parts C1', C1" are assigned to the first communication entity 200e, and therefore carry data to be transmitted to the first communication entity 200e. One part C2 of the common stream is assigned to the second communication entity 200f. The private streams of the RSMA messages to be transmitted to the first communication entity 200d, the second communication entity 200e, and the third communication entity 200f include, respectively, first private data P1, second private data P2, and third private data P3.

Although this example explains the operation with three communication entities, the disclosure is not limited thereto and can be extended to accommodate more (or less) communication entities and different types of services. By implementing this approach, RSMA becomes a robust candidate for supporting hybrid core services, making it not only an ideal multi-access method but also a superior scheduling strategy.

That is, in this embodiment, common parts associated with a plurality of communication entities are assigned to communication entities according to their service category (e.g. uRLLC, eMBB, mMTC). For this purpose, for example, a priority level may be associated with each service category. Further, a larger number of common parts of a common stream of a RSMA message may be assigned to a communication entity, the larger respective priority level is.

Accordingly, data to be transmitted to one of the plurality of communication entities may be included in a common part assigned to said one of the plurality of communication entities. That is, data to be transmitted to one of the plurality of communication entities is included in a common part assigned to said one of the plurality of communication entities, even though said common part is associated with another communication entity

For example, a number of common parts assigned to each communication entity of service category uRLLC is larger than a number of common parts assigned to each communication entity of service category mMTC, and the number of common parts assigned to each communication entity of service category mMTC is larger than a number of common parts assigned to each communication entity of service category eMBB. In this respect, it goes without saying that the service categories may include massive machine-type communication, mMTC, enhanced mobile broadband, eMBB, and ultra-reliable and low latency communications, uRLLC.

Similarly to the first embodiment, the base station 100 may receive a cooperation indicator from each of the plurality of communication entities, the cooperation indicator indicating whether respective communication entity is available for cooperative communication.

Accordingly, the base station may only assign common parts associated with communication entities available for cooperative communication to other communication entities. That is, a common part associated with a communication entity not available for cooperative communication is not assigned to another communication entity.

It is to be understood that the approach of the first embodiment and the approach of the second embodiment may be combined. That is, common parts of an RSMA message may be assigned to communication entities according to respective service categories and, if a RSMA message cannot be successfully decoded by a certain communication entity and a corresponding NACK message is provided, the common stream of a subsequent RSMA message to be transmitted to said communication entity may include common parts associated with another communication entity, that includes a redundancy version of the private data included in the RSMA message that could not be decoded successfully.

*Advantages achieved by the present disclosure*

According to embodiments of the present disclosure, an efficient and scalable solution is provided compared to traditional relay-based systems.

By introducing the Parallel HARQ Protocol with Multi-User Collaboration Aligned with 3GPP and Wi-Fi Standards, the present disclosure may replace the traditional serial HARQ method, aligning with evolving 3GPP and Wi-Fi standards. By leveraging common stream features and fostering multi-user collaboration within RSMA networks, network performance may be increased.

In particular, the parallel HARQ protocol enhances the efficiency of HARQ rounds, reducing latency and increasing data transmission reliability. Further, by incorporating multiple communication entities into the retransmission process, the redundancy and resilience may be improved, thereby improving overall network robustness.

Further, leveraging resources from multiple communication entities for retransmissions rather than relying solely on individual retransmissions may enhance transmission reliability. This method significantly improves diversity at the receiver end, directly contributing to superior performance.

Still further, the improvements in diversity and performance from the parallel HARQ protocol may offer substantial enhancements in latency and throughput, crucial for high-priority, real-time applications. Consequently, RSMA emerges as a highly suitable solution for supporting hybrid core services, including massive IoT networks.

In addition, the parallel HARQ mechanism leverages RSMA features to broadcast a common stream at higher power to all communication entities, which enhances reliability, accelerates data recovery, and ensures efficient communication without requiring a relay network.

By adopting a communication entity-centric approach, this design enhances system efficiency and scalability, reduces complexity, and supports the development of more advanced wireless communication systems.

The implementation of a new parallel HARQ protocol, in place of the traditional serial method, presents a significant advancement by leveraging common stream features and enabling collaboration among multi-access users within RSMA networks.

*Implementations in software and hardware*

The methodologies described herein may be implemented by various means depending on the application. For example, these methodologies may be implemented in hardware, operation system, firmware, software, or any combination of two or all of them. For a hardware implementation, any processing circuitry may be used, which may include one or more processors. For example, the hardware may include one or more of application-specific integrated circuits (ASICs), digital signal processors (DSPs), digital signal processing devices (DSPDs), programmable logic devices (PLDs), field-programmable gate arrays (FPGAs), processors, controllers, any electronic devices, or other electronic circuitry units or elements designed to perform the functions described above.

If implemented as program code, the functions performed by the transmitting apparatus (device) may be stored as one or more instructions or code on a non-transitory computer-readable storage medium or any other type of storage. The computer-readable media includes physical computer storage media, which may be any available medium that can be accessed by the computer, or, in general by the processing circuitry. Such computer-readable media may comprise RAM, ROM, EEPROM, optical disk storage, magnetic disk storage, semiconductor storage, or other storage devices. Some particular and non-limiting examples include compact disc (CD), CD-ROM, laser disc, optical disc, digital versatile disc (DVD), Blu-ray (BD) disc, or the like. Combinations of different storage media are also possible - in other words, distributed and heterogeneous storage may be employed.

The embodiments and exemplary implementations mentioned above show some non-limiting examples. It is understood that various modifications may be made without departing from the claimed subject matter. For example, modifications may be made to adapt the examples to new systems and scenarios without departing from the central concept described herein.

*Selected embodiments and examples*

Summarizing, apparatuses, methods and techniques are described for adaptive power boosting in wireless communication networks, making use of distributed-tone resource units determined based on a range, QoS requirement and/or characteristics of a wireless communication entity.

According to a first aspect, provided is a base station, comprising: a transceiver configured to transmit, to a first communication entity, a first rate-splitting multiple access, RSMA, message, wherein a private stream of the first RSMA message includes first private data; and receive an acknowledgement message from the first communication entity, indicating whether or not the first RSMA message could be successfully decoded; and circuitry configured to, if the acknowledgement message indicates that the first RSMA message could not be successfully decoded, determine a second RSMA message, wherein a common stream of the second RSMA message includes a first common part associated with the first communication entity and a second common part associated with a second communication entity, each of the first common part and the second common part includes a redundancy version of the first private data, wherein the transceiver is configured to transmit the second RSMA message to the first communication entity.

In an embodiment, a common stream of the first RSMA message includes a first common part associated with the first communication entity and a second common part associated with the second communication entity.

In an embodiment, a private stream of the second RSMA message includes the first private data.

In an embodiment, the first communication entity is associated with a requirement on reliability and/or latency of communication; and the second communication entity is not associated with the requirement on reliability and/or latency of communication.

In an embodiment, the requirement on reliability and/or latency of communication is a requirement of Ulra-Reliable Low-Latency Communication, uRLLC.

In an embodiment, the second communication entity is associated with a requirement of enhanced mobile broadband, EMBB, and/or massive machine-type communication, mMTC.

In an embodiment, the transceiver is configured to receive, from each of a plurality of communication entities, a cooperation indicator indicating whether or not respective communication entity is available for cooperative communication; and common parts included in the second RSMA message and associated with communication entities available for cooperative communication include the first private data.

In an embodiment, the transceiver is configured to transmit, to the second communication entity, a third RSMA message, wherein a common stream of the third RSMA corresponds to the common stream of the first RSMA message; and a private part of the third RSMA message includes second private data; transmit, to the second communication entity, a fourth RSMA message, wherein a common stream of the fourth RSMA message corresponds to the common stream of the second RSMA message; and a private stream of the fourth RSMA message includes fourth private data; the first RSMA message and the third RSMA message are transmitted at a first timing instance; and the second RSMA message and the fourth RSMA message are transmitted at a second timing instance later than the first timing instance.

According to a second aspect, provided is a communication entity, comprising: a transceiver configured to receive a first RSMA message rate-splitting multiple access, RSMA, message, wherein a private stream of the first RSMA message includes first private data; circuitry configured to decode the first RSMA message, wherein the transceiver is configured to transmit an acknowledgement message, indicating whether or not the first RSMA message could be successfully decoded; and receive, if the first RSMA message could be successfully decoded, a second RSMA message, wherein a common stream of the second RSMA message includes a first common part associated with the communication entity and a second common part associated with a second communication entity, each of the first common part and the second common part includes a redundancy version of the first private data.

For example, the second communication entity is different form the communication entity.

For example, the first RSMA message is received from a base station, the acknowledgement message is transmitted to the base station, and the second RSMA message is received from the base station.

In an embodiment, a common stream of the first RSMA message includes a first common part associated with the communication entity and a second common part associated with the second communication entity.

In an embodiment, a private stream of the second RSMA message includes the first private data.

In an embodiment, the communication entity is associated with a requirement on reliability and/or latency of communication; and the second communication entity is not associated with the requirement on reliability and/or latency of communication.

In an embodiment, the requirement on reliability and/or latency of communication is a requirement of Ulra-Reliable Low-Latency Communication, uRLLC.

In an embodiment, the second communication entity is associated with a requirement of enhanced mobile broadband, EMBB, and/or massive machine-type communication, mMTC.

In an embodiment, the transceiver is configured to transmit a cooperation indicator indicating whether or not the communication entity is available for cooperative communication.

In an embodiment, common parts included in the second RSMA message and associated with communication entities available for cooperative communication include the first private data.

According to a third aspect, provided is a communication entity, comprising circuitry configured to determine whether or not the communication entity is available for cooperative communication; and a transceiver configured to transmit a cooperation indicator indicating whether or not the communication entity is available for cooperative communication, wherein the transceiver is further configured to receive a rate-splitting multiple access, RSMA message, if the communication entity is available for cooperative communication, wherein a common stream of the RSMA message includes a first common part associated with the communication entity; and the first common part includes a redundancy version of private data associated with another communication entity.

According to a fourth aspect, provided is a method for a base station, comprising: transmitting, to a first communication entity, a first rate-splitting multiple access, RSMA, message, wherein a private stream of the first RSMA message includes first private data; and receiving an acknowledgement message from the first communication entity, indicating whether or not the first RSMA message could be successfully decoded; if the acknowledgement message indicates that the first RSMA message could not be successfully decoded, determine a second RSMA message, wherein a common stream of the second RSMA message includes a first common part associated with the first communication entity and a second common part associated with a second communication entity, each of the first common part and the second common part includes a redundancy version of the first private data; and transmitting the second RSMA message to the first communication entity.

In an embodiment, a common stream of the first RSMA message includes a first common part associated with the first communication entity and a second common part associated with the second communication entity.

In an embodiment, a private stream of the second RSMA message includes the first private data.

In an embodiment, the first communication entity is associated with a requirement on reliability and/or latency of communication; and the second communication entity is not associated with the requirement on reliability and/or latency of communication.

In an embodiment, the requirement on reliability and/or latency of communication is a requirement of Ulra-Reliable Low-Latency Communication, uRLLC.

In an embodiment, the second communication entity is associated with a requirement of enhanced mobile broadband, EMBB, and/or massive machine-type communication, mMTC.

In an embodiment, the method comprises receiving, from each of a plurality of communication entities, a cooperation indicator indicating whether or not respective communication entity is available for cooperative communication; and common parts included in the second RSMA message and associated with communication entities available for cooperative communication include the first private data.

In an embodiment, the method comprises transmitting, to the second communication entity, a third RSMA message, wherein a common stream of the third RSMA corresponds to the common stream of the first RSMA message; and a private part of the third RSMA message includes second private data; transmitting, to the second communication entity, a fourth RSMA message, wherein a common stream of the fourth RSMA message corresponds to the common stream of the second RSMA message; and a private stream of the fourth RSMA message includes fourth private data; the first RSMA message and the third RSMA message are transmitted at a first timing instance; and the second RSMA message and the fourth RSMA message are transmitted at a second timing instance later than the first timing instance.

According to a fifth aspect, provided is a method for a communication entity, comprising: receiving a first RSMA message rate-splitting multiple access, RSMA, message, wherein a private stream of the first RSMA message includes first private data; decoding the first RSMA message; transmitting an acknowledgement message from the communication entity, indicating whether or not the first RSMA message could be successfully decoded; and receiving, if the first RSMA message could be successfully decoded, a second RSMA message, wherein a common stream of the second RSMA message includes a first common part associated with the communication entity and a second common part associated with a second communication entity, each of the first common part and the second common part includes a redundancy version of the first private data.

In an embodiment, a common stream of the first RSMA message includes a first common part associated with the communication entity and a second common part associated with the second communication entity.

In an embodiment, a private stream of the second RSMA message includes the first private data.

In an embodiment, the communication entity is associated with a requirement on reliability and/or latency of communication; and the second communication entity is not associated with the requirement on reliability and/or latency of communication.

In an embodiment, the requirement on reliability and/or latency of communication is a requirement of Ulra-Reliable Low-Latency Communication, uRLLC.

In an embodiment, the second communication entity is associated with a requirement of enhanced mobile broadband, EMBB, and/or massive machine-type communication, mMTC.

In an embodiment, the method comprises transmitting a cooperation indicator indicating whether or not the communication entity is available for cooperative communication.

In an embodiment, common parts included in the second RSMA message and associated with communication entities available for cooperative communication include the first private data.

According to a sixth aspect, provided is a method for communication entity, comprising determining whether or not the communication entity is available for cooperative communication; and transmitting a cooperation indicator indicating whether or not the communication entity is available for cooperative communication; and receiving a rate-splitting multiple access, RSMA message, if the communication entity is available for cooperative communication, wherein a common stream of the RSMA message includes a first common part associated with the communication entity; and the first common part includes a redundancy version of private data associated with another communication entity.

According to a seventh aspect, provided is a computer program stored in a non-transitory, computer-readable medium, the program comprising code instructions which, when executed on one or more processors, cause the one or more processors to perform steps of a method according to any one of the above-described methods.

According to an eighth aspect, provided is a base station serving a plurality of communication entities, comprising circuity, configured to determine a rate-splitting multiple access, RSMA, message for each of the plurality of communication entities, wherein a common stream of each RSMA message includes a plurality of common parts, each associated with one of the plurality of communication entities, and the circuitry is configured to assign each of the plurality of common parts to one communication entity from among the plurality of communication entities, according to service categories of the plurality of communication entities; and a transceiver configured to transmit each RSMA message to the respective communication entity.

For example, a priority level is associated with each service category.

In an embodiment, a number of common parts assigned to a communication entity is larger, the larger respective priority level is.

In an embodiment, the transceiver is configured to receive a cooperation indicator from each of the plurality of communication entities, the cooperation indicator indicating whether respective communication entity is available for cooperative communication.

In an embodiment, the circuitry is configured to, when determining the RSMA message for each of the plurality of communication entities, assign a common part associated with a communication entity indicated as not available for cooperative communication, to said communication entity, and assign a common part associated with a communication entity indicated as available for cooperative communication, to said communication entity or to another communication entity indicated as available for cooperative communication, according to the service categories of the plurality of communication entities.

In an embodiment, the service categories include massive machine-type communication, mMTC, enhanced mobile broadband, eMBB, and ultra-reliable and low latency communications, uRLLC.

In an embodiment, a number of common parts assigned to each communication entity of service category uRLLC is larger than a number of common parts assigned to each communication entity of service category mMTC, and the number of common parts assigned to each communication entity of service category mMTC is larger than a number of common parts assigned to each communication entity of service category eMBB.

In an embodiment, data to be transmitted to one of the plurality of communication entities is included in a common part assigned to said one of the plurality of communication entities.

For example, the data to be transmitted to one of the plurality of communication entities is included in a common part assigned to said one of the plurality of communication entities, even though said common part is associated with another communication entity.

According to a ninth aspect, provided is a communication entity, comprising a transceiver configured to receive a rate-splitting multiple access, RSMA, message, wherein a common stream of each RSMA message includes a plurality of common parts, each associated with one of a plurality of communication entities, and each of the plurality of common parts is assigned to one communication entity from among the plurality of communication entities, according to service categories of the plurality of communication entities; and circuitry configured to decode the RSMA message.

For example, a priority level is associated with each service category.

In an embodiment, a number of common parts assigned to a communication entity from among the plurality of communication entities is larger, the larger respective priority level is.

In an embodiment, the transceiver is configured to transmit a cooperation indicator, the cooperation indicator indicating whether the communication entity is available for cooperative communication.

In an embodiment, the service categories include massive machine-type communication, mMTC, enhanced mobile broadband, eMBB, and ultra-reliable and low latency communications, uRLLC.

In an embodiment, a number of common parts assigned to each communication entity of service category uRLLC is larger than a number of common parts assigned to each communication entity of service category mMTC, and the number of common parts assigned to each communication entity of service category mMTC is larger than a number of common parts assigned to each communication entity of service category eMBB.

In an embodiment, data to be transmitted to one of the plurality of communication entities is included in a common part assigned to said one of the plurality of communication entities.

For example, the data to be transmitted to one of the plurality of communication entities is included in a common part assigned to said one of the plurality of communication entities, even though said common part is associated with another communication entity.

According to a tenth aspect, provided is a method for a base station serving a plurality of communication entities, comprising determining a rate-splitting multiple access, RSMA, message for each of the plurality of communication entities, wherein a common stream of each RSMA message includes a plurality of common parts, each associated with one of the plurality of communication entities, and each of the plurality of common parts is assigned to one communication entity from among the plurality of communication entities, according to service categories of the plurality of communication entities; and transmitting each RSMA message to the respective communication entity.

For example, a priority level is associated with each service category.

In an embodiment, a number of common parts assigned to a communication entity is larger, the larger respective priority level is.

In an embodiment, the method comprises receiving a cooperation indicator from each of the plurality of communication entities, the cooperation indicator indicating whether respective communication entity is available for cooperative communication.

In an embodiment, the method comprises, when determining the RSMA message for each of the plurality of communication entities, assigning a common part associated with a communication entity indicated as not available for cooperative communication, to said communication entity, and assigning a common part associated with a communication entity indicated as available for cooperative communication, to said communication entity or to another communication entity indicated as available for cooperative communication, according to the service categories of the plurality of communication entities.

In an embodiment, the service categories include massive machine-type communication, mMTC, enhanced mobile broadband, eMBB, and ultra-reliable and low latency communications, uRLLC.

In an embodiment, a number of common parts assigned to each communication entity of service category uRLLC is larger than a number of common parts assigned to each communication entity of service category mMTC, and the number of common parts assigned to each communication entity of service category mMTC is larger than a number of common parts assigned to each communication entity of service category eMBB.

In an embodiment, data to be transmitted to one of the plurality of communication entities is included in a common part assigned to said one of the plurality of communication entities.

For example, the data to be transmitted to one of the plurality of communication entities is included in a common part assigned to said one of the plurality of communication entities, even though said common part is associated with another communication entity.

According to an eleventh aspect, provided is a method for a communication entity, comprising receiving a rate-splitting multiple access, RSMA, message, wherein a common stream of each RSMA message includes a plurality of common parts, each associated with one of a plurality of communication entities, and each of the plurality of common parts is assigned to one communication entity from among the plurality of communication entities, according to service categories of the plurality of communication entities; and decoding the RSMA message.

For example, a priority level is associated with each service category.

In an embodiment, a number of common parts assigned to a communication entity from among the plurality of communication entities is larger, the larger respective priority level is.

In an embodiment, the method comprises transmitting a cooperation indicator, the cooperation indicator indicating whether the communication entity is available for cooperative communication.

In an embodiment, the service categories include massive machine-type communication, mMTC, enhanced mobile broadband, eMBB, and ultra-reliable and low latency communications, uRLLC.

In an embodiment, a number of common parts assigned to each communication entity of service category uRLLC is larger than a number of common parts assigned to each communication entity of service category mMTC, and the number of common parts assigned to each communication entity of service category mMTC is larger than a number of common parts assigned to each communication entity of service category eMBB.

In an embodiment, data to be transmitted to one of the plurality of communication entities is included in a common part assigned to said one of the plurality of communication entities.

For example, the data to be transmitted to one of the plurality of communication entities is included in a common part assigned to said one of the plurality of communication entities, even though said common part is associated with another communication entity.

According to a twelfth aspect, provided is a computer program stored in a non-transitory, computer-readable medium, the program comprising code instructions which, when executed on one or more processors, cause the one or more processors to perform steps of a method according to any one of the above-described methods.

Any of the apparatuses of the present disclosure may be embodied on an integrated chip.

Any of the above-mentioned embodiments and exemplary implementations may be combined.

Although the disclosed subject matter has been described in detail for the purpose of illustration based on what is currently considered to be the most practical and preferred embodiments, it is to be understood that such detail is solely for that purpose and that the disclosed subject matter is not limited to the disclosed embodiments, but, on the contrary, is intended to cover modifications and equivalent arrangements that are within the spirit and scope of the appended claims. For example, it is to be understood that the presently disclosed subject matter contemplates that, to the extent possible, one or more features of any embodiment can be combined with one or more features of any other embodiment.

**Claims**

1. A base station serving a plurality of communication entities, comprising

   circuitry configured to

      determine a rate-splitting multiple access, RSMA, message for each of the plurality of communication entities, wherein a common stream of each RSMA message includes a plurality of common parts, each associated with one of the plurality of communication entities, and
      assign each of the plurality of common parts to one communication entity from among the plurality of communication entities, according to service categories of the plurality of communication entities; and

   a transceiver configured to transmit each RSMA message to the respective communication entity.

2. The base station according to claim 1, wherein a priority level is associated with each service category.

3. The base station according to claim 2, wherein a number of common parts assigned to a communication entity is larger, the larger respective priority level is.

4. The base station according to any one of claims 1 to 3, wherein the transceiver is configured to receive a cooperation indicator from each of the plurality of communication entities, the cooperation indicator indicating whether respective communication entity is available for cooperative communication.

5. The base station according to claim 4, wherein the circuitry is configured to, when determining the RSMA message for each of the plurality of communication entities,

assign a common part associated with a communication entity indicated as not available for cooperative communication, to said communication entity, and

assign a common part associated with a communication entity indicated as available for cooperative communication, to said communication entity or to another communication entity indicated as available for cooperative communication, according to the service categories of the plurality of communication entities.

6. The base station according to any one of claims 1 to 5, wherein
the service categories include massive machine-type communication, mMTC, enhanced mobile broadband, eMBB, and ultra-reliable and low latency communications, uRLLC.

7. The base station according to claim 6, wherein

a number of common parts assigned to each communication entity of service category uRLLC is larger than a number of common parts assigned to each communication entity of service category mMTC, and
the number of common parts assigned to each communication entity of service category mMTC is larger than a number of common parts assigned to each communication entity of service category eMBB.

8. The base station according to any one of claims 1 to 7, wherein
data to be transmitted to one of the plurality of communication entities is included in a common part assigned to said one of the plurality of communication entities.

9. The base station according to claim 8, wherein
the data to be transmitted to one of the plurality of communication entities is included in a common part assigned to said one of the plurality of communication entities, even though said common part is associated with another communication entity.

10. A communication entity, comprising

a transceiver configured to receive a rate-splitting multiple access, RSMA, message, wherein

a common stream of each RSMA message includes a plurality of common parts, each associated with one of a plurality of communication entities, and
each of the plurality of common parts is assigned to one communication entity from among the plurality of communication entities, according to service categories of the plurality of communication entities; and; and

circuitry configured to decode the RSMA message.

11. A method for a base station serving a plurality of communication entities, comprising

determining a rate-splitting multiple access, RSMA, message for each of the plurality of communication entities, wherein

a common stream of each RSMA message includes a plurality of common parts, each associated with one of the plurality of communication entities, and
each of the plurality of common parts is assigned to one communication entity from among the plurality of communication entities, according to service categories of the plurality of communication entities; and

transmitting each RSMA message to the respective communication entity.

12. A method for a communication entity, comprising

receiving a rate-splitting multiple access, RSMA, message, wherein

a common stream of each RSMA message includes a plurality of common parts, each associated with one of a plurality of communication entities, and
each of the plurality of common parts is assigned to one communication entity from among the plurality of communication entities, according to service categories of the plurality of communication entities; and

decoding the RSMA message

13. A computer program stored in a non-transitory, computer-readable medium, the program comprising code instructions which, when executed on one or more processors, cause the one or more processors to perform steps of a method according to claim 11 or 12.

**Fig. 1**

Requirements:
1. Low latency
2. High reliability
3. Good data rate

**User 1**

Requirements:
1. Good data rate
2. Good reliability

**User 2**

**Fig. 2**

|  |  | |  |  |
|---|---|---|---|---|
| C1 | C2 | | C1 | C2 |
| P1 | | | P2 | |

common stream

private stream

# Fig. 3a

# Fig. 3b

# Fig. 4

**Fig. 5a**

**Fig. 5b**

Fig. 6

Fig. 7a

Fig. 7b

**Fig. 8a**　　　　　　　**Fig. 8b**

# uRLLC with mMTC

user 1

Low latency

user 2

High capacity

RSMA transmission
1st HARQ round

common stream →

| C1' | C2'' |
|-----|------|
| P1 | |
| P2 | |

private stream 1 →

private stream 2 →

## Fig. 9a

# URLLC with eMBB

user 1

Low latency

user 2

High data rate

RSMA transmission
1st HARQ round

common stream →

| C1' | C2'' |
|-----|------|
| P1 | |
| P2 | |

private stream 1 →

private stream 2 →

## Fig. 9b

mMTC with eMBB

200d — user 2
High capacity

200c — user 1
High data rate

RSMA transmission

| common stream → | C11 | C12 |
| private stream 1 → | P1 | |
| private stream 2 → | P2 | |

**Fig. 10a**

eMBB with URLLC with mMTC

200f — user 2
High data rate

user 1
Low latency —— 200e

200g — user 3
High capacity

RSMA transmission

| common stream → | C1' | C1'' | C2 |
| private stream 1 → | P1 | | |
| private stream 2 → | P2 | | |
| private stream 3 → | P3 | | |

**Fig. 10b**

| | Europäisches Patentamt European Patent Office Office européen des brevets | **EUROPEAN SEARCH REPORT** | **Application Number** EP 24 21 6149 |
|---|---|---|---|

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2024/195528 A1 (ELSHAFIE AHMED [US] ET AL) 13 June 2024 (2024-06-13) * paragraphs [0003] - [0006], [0046] - [0047], [0078], [0110], [0118], [0120], [0130], [0133], [0137], [0139]; claims 1, 2, 3; figures 5, 6, 7, 8 * * paragraphs [0156] - [0158], [0166], [0185], [0186], [0187], [0194] - [0196], [0205] - [0212] * ----- | 1-13 | INV. H04L1/1867 |
| A | MAO YIJIE ET AL: "Rate-Splitting Multiple Access: Fundamentals, Survey, and Future Research Trends", IEEE COMMUNICATIONS SURVEYS & TUTORIALS, IEEE, vol. 24, no. 4, 15 July 2022 (2022-07-15), pages 2073-2126, XP011928216, DOI: 10.1109/COMST.2022.3191937 [retrieved on 2022-07-18] * page 1 - page 16; figures 1, 2, 4, 7, 14; table IX, * * page 37 - page 38 * * page 47 * ----- -/-- | 1-13 | TECHNICAL FIELDS SEARCHED (IPC) H04L |

The present search report has been drawn up for all claims

| Place of search | Date of completion of the search | Examiner |
|---|---|---|
| The Hague | 25 February 2025 | Khirallah, Chadi |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
................................................................
& : member of the same patent family, corresponding document

EPO FORM 1503 03.82 (P04C01)

page 1 of 2

Europäisches
Patentamt

European
Patent Office

Office européen
des brevets

**EUROPEAN SEARCH REPORT**

Application Number

EP 24 21 6149

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CLERCKX BRUNO ET AL: "A Primer on Rate-Splitting Multiple Access: Tutorial, Myths, and Frequently Asked Questions", IEEE JOURNAL ON SELECTED AREAS IN COMMUNICATIONS, IEEE SERVICE CENTER, PISCATAWAY, US, vol. 41, no. 5, 6 February 2023 (2023-02-06), pages 1265-1308, XP011938559, ISSN: 0733-8716, DOI: 10.1109/JSAC.2023.3242718 [retrieved on 2023-02-06] * page 1 - page 5 * * pages 12, 13; figures 7, 10, 15, 18, 21; tables IV, VII * * page 16 - page 30 * ----- | 1-13 | |
| A | KARACORA YASEMIN ET AL: "Rate-Splitting Enabled Multi-Connectivity in Mixed-Criticality Systems", ICC 2023 - IEEE INTERNATIONAL CONFERENCE ON COMMUNICATIONS, IEEE, 28 May 2023 (2023-05-28), pages 5340-5345, XP034451616, DOI: 10.1109/ICC45041.2023.10278709 [retrieved on 2023-10-23] * the whole document * ----- | 1-13 | TECHNICAL FIELDS SEARCHED (IPC) |

The present search report has been drawn up for all claims

| Place of search | Date of completion of the search | Examiner |
|---|---|---|
| The Hague | 25 February 2025 | Khirallah, Chadi |

EPO FORM 1503 03.82 (P04C01)

page 2 of 2

## ANNEX TO THE EUROPEAN SEARCH REPORT
## ON EUROPEAN PATENT APPLICATION NO.

EP 24 21 6149

This annex lists the patent family members relating to the patent documents cited in the above-mentioned European search report.
The members are as contained in the European Patent Office EDP file on
The European Patent Office is in no way liable for these particulars which are merely given for the purpose of information.

25-02-2025

| Patent document cited in search report | Publication date | Patent family member(s) | Publication date |
|---|---|---|---|
| US 2024195528 A1 | 13-06-2024 | US 2024195528 A1<br>WO 2024123511 A1 | 13-06-2024<br>13-06-2024 |

EPO FORM P0459

For more details about this annex : see Official Journal of the European Patent Office, No. 12/82